# EUROPEAN PATENT SPECIFICATION

(11) **EP 0 545 519 B1**
(45) Date of publication and mention of the grant of the patent: **26.03.1997**
(21) Application number: 92306015.6
(22) Date of filing: 30.06.1992
(51) Int. Cl.: G01B 11/06

(54) **Non-contact measuring method for step difference and device therefor**
Berührungsloses Verfahren und Vorrichtung zur Höhendifferenzmessung von zwei Oberflächen
Procédé de mesure sans contact et dispositif pour la mesure de la différence en hauteur de deux surfaces

(30) Priority: 04.12.1991 JP 349255/91
(43) Date of publication of application: 09.06.1993
(73) Proprietor: MITSUBISHI DENKI KABUSHIKI KAISHA, Tokyo (JP)
(72) Inventor: Matsuoka, Hiroshi, c/o MITSUBISHI DENKI K. K., 1, Mizuhara 4-chome, Itami-shi Hyogo-ken (JP)
(74) Representative: Beresford, Keith Denis Lewis

(56) References cited:
- EP-A- 0 094 835
- PATENT ABSTRACTS OF JAPAN vol. 10, no. 278 (P-499)(2334) 20 September 1986 & JP-A-61 099 805 ( HITACHI LTD ) * abstract *.
- PATENT ABSTRACTS OF JAPAN vol. 13, no. 165 (P-860)20 April 1989 & JP-A-64 001 903 ( TOSHIBA CORP.) * abstract *.

## Description

### FIELD OF THE INVENTION

The present invention relates to a non-contact measuring method for a step difference and a device therefor in which a step difference formed on a sample is measured without touching the sample and, more particularly, to an improvement of precision in measurement.

### BACKGROUND OF THE INVENTION

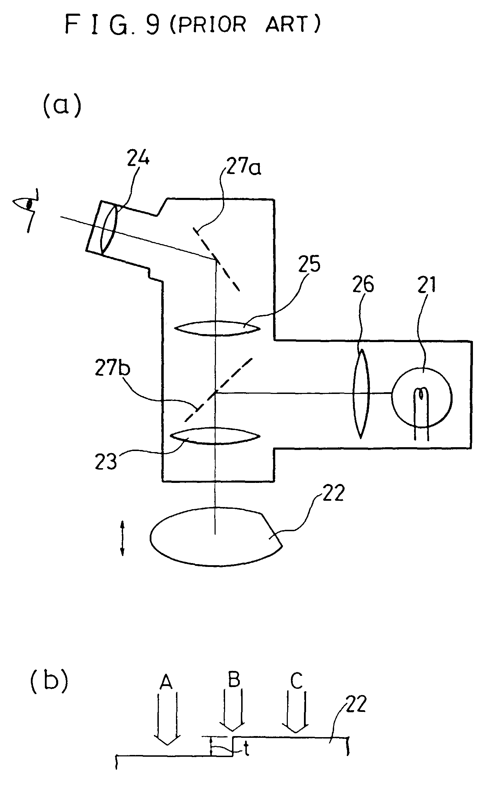

Fig. 9(a) is a schematic view showing a conventional optical microscope used in measuring a step difference without touching. Referring to Fig. 9(a), reference numeral 21 designates a light source for illumination and reference numeral 22 designates a sample which is as an object to be measured and, for example, put on a stage (not shown). In addition, reference numeral 23 designates an objective lens opposed to the sample 22, reference numeral 24 designates an eyepiece, reference numeral 25 designates an intermediate lens arranged on an optical path between the eyepiece 24 and the objective lens 23, and reference numeral 26 designates a condensing lens provided ahead of the light source 21. Reference numerals 27a and 27b designates mirrors provided between lenses; the mirror 27a refracts a beam between the eyepiece 24 and the intermediate lens 25 and the mirror 27b does not refract a beam between the intermediate lens 25 and the objective lens 23 but refracts only a beam from the light source 21.

Next, a principle of an operation will be described. Light for illuminating the sample 22 is generated by a light source 21 in the microscope and condensed by the condensing lens 26 and reflected by the mirror 27b to illuminate the sample 22. Then, the reflected light from the sample 22 is through an optical system consisting of the objective lens 23, the intermediate lens 25, the mirror 27a and the eyepiece 24, whereby the sample 22 can be magnified by a desired magnifying power to be observed.

Using such an optical microscope, a step difference t between sections A and C is measured by focusing on each section, for example, each of sections A and C in the sample 22 shown in Fig. 9(b) by adjusting a distance between the sample 22 and the objective lens 23 as shown by arrows in the figure and measuring a distance between the sample 22 and the objective lens 23 (a difference in vertical coordinates) at the time of focusing using a dial gauge or the like.

Since the conventional non-contact measuring method for a step difference and a device therefor are as described above, depth of focus (depth of field) depends on how to combine the objective lens and eyepiece. For example, in a case of the objective lens of ten magnifications, its depth of focus is 10 microns and in a case of the objective lens of twenty magnifications, its depth of focus is 3.5 microns, which values are largely different. This difference in depth of focus is found as a difference in error when the position of coordinates of the sample is determined, so that measurement can not be uniformly taken. Furthermore, when the step difference is smaller than the depth of focus of the objective lens, it is impossible to take a measurement.

In addition, since an operator determines the focal position, that is, the position of the stepped surface of the sample through visual observation, an error between operators is generated, so that a step difference can not be precisely measured.

Still further, it is difficult to adjust the focus when the section to be measured has the step difference such as a section B as shown in Fig. 9(b).

For example, a method for measuring a step difference without touching an object to be measured is disclosed in Japanese Patent Laying-Open No. 1903/1989 in which light is applied to a region having a step difference and it is interfered with reflected light or in Japanese Patent Laying-Open No. 289704/1987 in which parallel light divided into the two wave surfaces is applied and interfered with each other to compose two wave surfaces and a change of intensity of an interference fringe at that time is converted to an electric signal to measure a step difference. However, in the above structures, signal processing is complicated or sufficient reflected light can not be obtained when the step difference is large or the section to be measured has a curbed portion. In this case, the interference fringe is not perfect and it could be impossible to take a measurement.

In JP-A-61-99805 and Patent Abstracts of Japan, Vol. 10, No. 278 (P-449) (2334) published 20 September 1986, there is disclosed a non-contacting measuring device for measuring a step difference between a first region and a second region on a surface of an object. A beam is focused onto an object surface by a lens and reflected light from the object surface passes back through the lens and then is caused to interfere with the second beam positioned between the lens and a photo detecting means. The optical path length of the second beam is varied by means of a moving mirror arrangement so as to modulate the second beam. The position of the sample surface is varied so as to obtain visible interference fringes and thereby measure steps on the sample surface.

### SUMMARY OF THE INVENTION

The present invention was made to solve the above problems and it is an object of the present invention to provide a non-contact measuring method for a step difference and a device therefor in which an error of the depth of focus caused by combination of an objective lens, an eyepiece, or the like or an error between operators is prevented, a position of a stepped surface can be precisely detected, an error in measurement is small and its structure is simple.

Other objects and advantages of the present invention will become apparent from the detailed description given hereinafter; it should be understood, however, that the detailed description and specific embodiment are given by way of illustration only, since various changes and modifications within the spirit and scope of the invention will become apparent to those skilled in the art from this detailed description.

According to the first aspect of the present invention there is provided a non-contact measuring method for measuring a step difference between a first region and a second region on a surface of an object, said method including the steps of:
directing a first light beam through a focusing means on to the object surface;
   moving the focusing means and the object surface relative to each other to produce a first visible interference pattern formed by interference between the first light beam after reflection from the object surface at said first region and a second light beam, to produce and a second visible interference pattern formed by interference between the first light beam after reflection from the object surface at said second region and the second light beam; and
using a measurement representative of the difference between the distances which the focusing means and the object surface move relative to each other to produce the visible interference patterns for light reflected from the first and second regions to measure the step difference on the object surface;
said method being characterised in comprising the steps of:
   producing said second light beam between the focusing means and the object surface; and
   producing the interference patterns at a position between the focusing means and the object surface.

According to a second aspect of the present invention there is provided a non-contact measuring device for measuring a step difference between a first region and a second region on a surface of an object comprising:
means for directing a first light beam through a focusing means onto the object surface;
means for producing a second light beam such that the second beam interferes with the first light beam after reflection of the first beam from the object surface; means for moving the focusing means and the object surface relative to each other in order to produce a first visible interference pattern from light reflected from said first region;
means for moving the focusing means and the object surface relative to each other in order to produce a second visible interference pattern from light reflected from said second region; and
means for using a measurement representative of the difference between the two relative distances moved to obtain an indication of the step difference between the first region and the second region on the object surface;
said device being characterised by:
said second light beam being produced between the focusing means and the object surface; and
the interference patterns being generated in a position between the object surface and the focusing means.

In addition, a white light source is used as a light source of the beam forming means.

Further, there is provided means for detecting light intensity which converts a color tone of an interference fringe generated by the white light to an electric signal and determines an amount of displacement of the predetermined position in each region of the object surface to be measured by detecting a specific color tone of the interference fringe.

Still further, in addition to the light intensity detecting means, there is provided means for displacing a position of the object surface in the vertical direction and means for controlling the displacing means on the basis of an output of the light intensity detecting means.

According to the present invention, a predetermined position to the object surface in each region to be measured is determined by recognizing an interference fringe generated at a predetermined position by the first and second beam formed by the beam forming means and a step difference on the object surface is calculated from an amount of displacement in the direction vertical to the surface in each region. As a result, the step difference can be measured by a simple structure with high precision.

In addition, a white light source is used as light for generating the interference fringe and an amount of displacement to the object surface in the vertical direction in each region is determined by observing the interference color of the interference fringe. As a result, the step difference can be detected with higher precision.

Further, since means for detecting light intensity is provided and a color tone of the interference fringe generated by the white light is converted to an electric signal and a vertical position in each region to be measured is detected by detecting a specific color tone, an error between operators can be completely prevented when the step difference is detected.

In addition to the light intensity detecting means, since means for displacing the position of the surface of the object to be measure in the vertical direction is provided and the position of the step difference can be automatically detected by displacing the position of the surface in accordance with the output of the light intensity detecting means, the step difference can be measured with high precision at high speed.

### BRIEF DESCRIPTION OF THE DRAWINGS

Fig. 1 is a view showing a principle of an interference type objective lens attached to an optical microscope in a non-contact measuring device for a step difference in accordance with an embodiment of the present invention.

Fig. 2 is a photograph showing an example of an interference fringe generated by the interference objective lens shown in Fig. 1.

Fig. 3 is a view showing a structure of a non-contact measuring device for a step difference in accordance with a first embodiment of the present invention.

Fig. 4 is a view for describing a principle in which the interference fringe is generated by white light.

Fig. 5 is a view showing an example of an intensity distribution of composed wave of the white light.

Fig. 6 is a view showing a structure of a non-contact measuring device for a step difference in accordance with a second embodiment of the present invention.

Fig. 7 is a view showing a structure of a non-contact measuring device for a step difference in accordance with a third embodiment of the present invention.

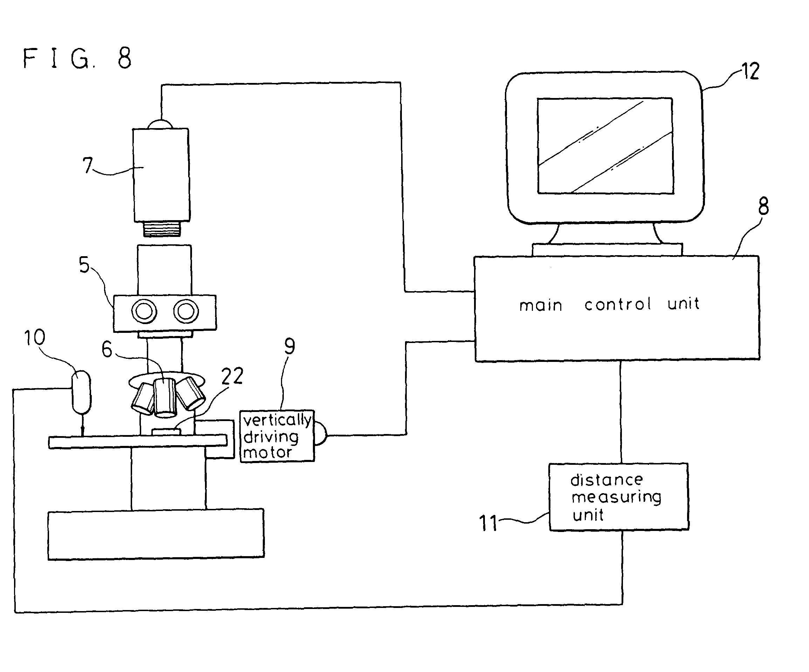

Fig. 8 is a view showing a structure of a non-contact measuring device for a step difference comprising a display for displaying a processed result in accordance with the third embodiment of the present invention.

Fig. 9 is view showing a structure of an optical microscope used as a conventional non-contact measuring device for a step difference.

### DETAILED DESCRIPTION OF THE PREFERRED EMBODIMENTS

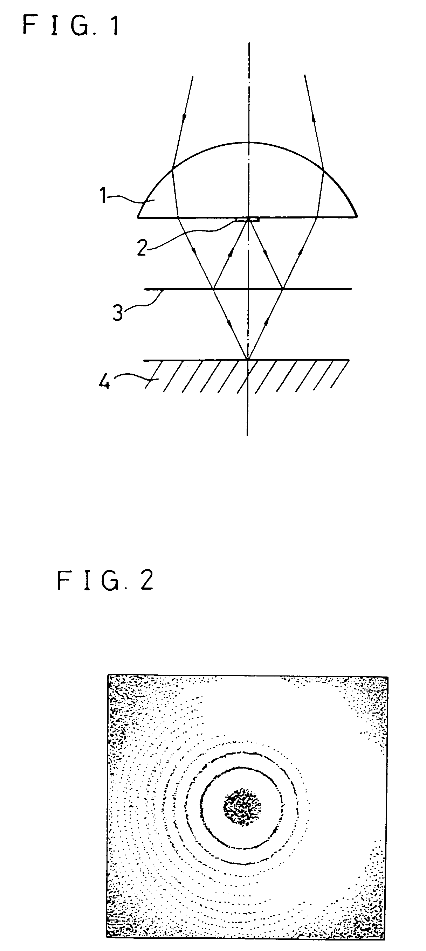

A non-contact measuring device for a step difference in accordance with an embodiment of the present invention will be described in reference to the drawings hereinafter. Fig. 1 is a view showing a principle of an interference type objective lens which is attached to an optical microscope in this device. Referring to Fig. 1, reference numeral 1 designates an interference type objective lens, reference numeral 2 designates a reflection referring mirror, reference numeral 3 designates a semi-transparent mirror arranged between the interference type objective lens 1 and a sample surface 4. Fig. 2 is a photograph showing an example of a generated interference fringe.

A principle of recognition of a focal position in the present invention will be described in reference to Fig. 1. As shown by arrows, light input from the upper left side of the interference type objective lens 1 is divided into two beams by the semi-transparent mirror 3 through the objective lens 1. One of the divided beams is applied to the sample surface 4 and the other is applied to the reflection referring mirror 2. Then, the reflected light from the sample surface 4 passes through the semi-transparent mirror 3 and get together with the reflected light from the reflection referring mirror 2 to be the same beam and then the beam pass through the objective lens 1. When the focal position of the sample surface 4 is adjusted, that is, when a position is adjusted so that an optical path length of the light passing through the semi-transparent mirror 3 and coming back again to the semi-transparent mirror 3 may be equal to an optical path length reflected by the semi-transparent mirror 3 and applied to the semi-transparent mirror 3 again from the referring mirror, the incident light becomes a double wave by interference of the light and then generates interference fringe as shown in Fig. 2. The interference fringe is generated at the cycle of λ/2 (0.2 to 0.3 micron) to an incident light λ. When the position is out of focus, the interference fringe is not generated.

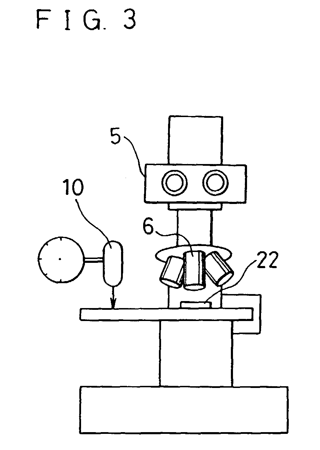

Next, a fundamental structure of the device of the present invention will be described. As shown in Fig. 3, an interference objective lens 6 is attached to an optical microscope 5 and a moving distance of a stage of the microscope 5 is measured by a vertical distance measuring contact segment 10 such as a mechanical dial gauge.

Next, a method for measuring a step difference will be described. A sample 22 is put on the stage of the microscope 5 and a distance between the sample and the interference objective lens 6 is adjusted to detect a focal position by recognizing the interference fringe generated by the above-described principle. At this time, for example, the dial gauge 10 is reset to obtain a reference value. Then, a position of the sample 22 to be observed is changed and then the same focusing operation is performed. At this time, a moving distance of the stage is read by the dial gauge 10 and a step difference of the sample surface is measured from a degree of displacement to the above reference value.

According to this embodiment of the present invention, since the interference objective lens 6 is attached onto the microscope 5, the step difference of the surface of the sample 22 is measured and then a focal position is found by recognizing generation of the interference fringe, an error of the depth of focus caused by combination of the objective lens, the eyepiece and the like and an error between operators can be prevented by a simple structure of the device, whereby a position of coordinates of the stepped surface can be detected with high precision. In addition, even when the step difference is comparatively large or the measured region has a curved surface, if the interference fringe is generated and it is possible to focus on the object, the step difference can be measured within a range of stroke of movement of the stage of the optical microscope.

Although the light source generating the interference fringe is not specifically limited in the above embodiment of the present invention, if the light source is white light, it is possible to focus on the position with higher precision.

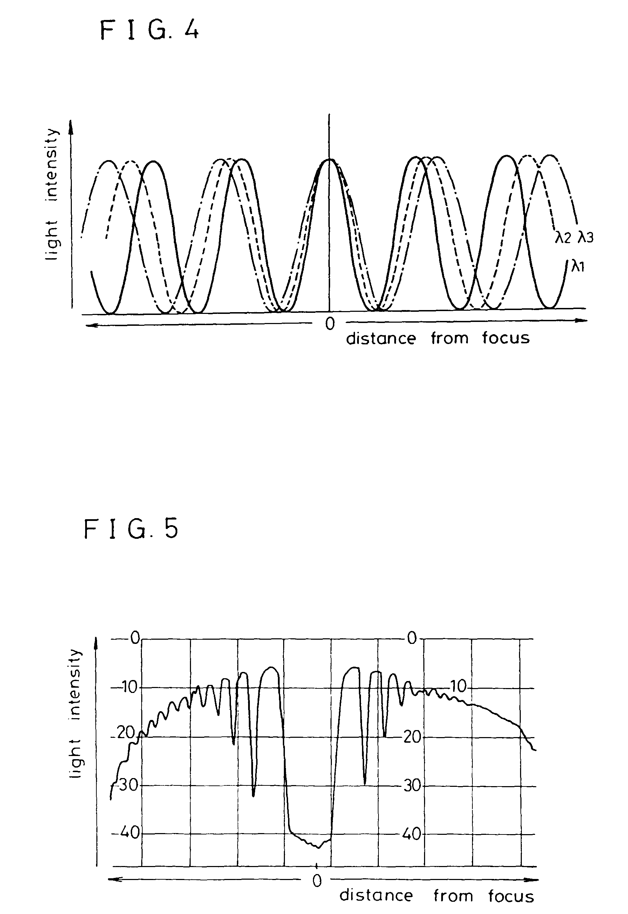

A case where the interference fringe is generated using the white light will be described hereinafter in reference to Figs. 4 and 5. For example, the interference fringe generated by monochromatic light having a wavelength of λ1 has the maximum intensity at 0 point on the screen and the maximum intensity is repeated at an interval of kλ₁ about this point (k is a constant). The interference fringe generated by light having a wavelength of λ₂ does not coincide with the interference fringe of the above wavelength λ₁, so that it is deviated from the other with distance from 0 point. Further, the interference fringe by a wavelength of λ₃ is also deviated from the other with distance from 0 point. More specifically, light of any wavelength has the maximum intensity at 0 point but they are deviated from each other with distance from 0 point, whereby composed light become the interference fringe having color (interference color).

When white light which is compound light is used, a phase difference of light of any wavelength is not 0 at 0 point and becomes dark when inverted through 90 degrees. Then, a black fringe appears and its intensity distribution is the minimum at 0 point as shown in Fig. 5.

As described above, the coordinate position is determined by a change of color of the interference fringe generated using the white light, especially by the black interference fringe generated when the sample surface coincides with the optical focal position, whereby the step difference can be measured with precision of approximately λ/2 (0.2 to 0.3 micron), for example, when the observation light λ = 0.55 micron.

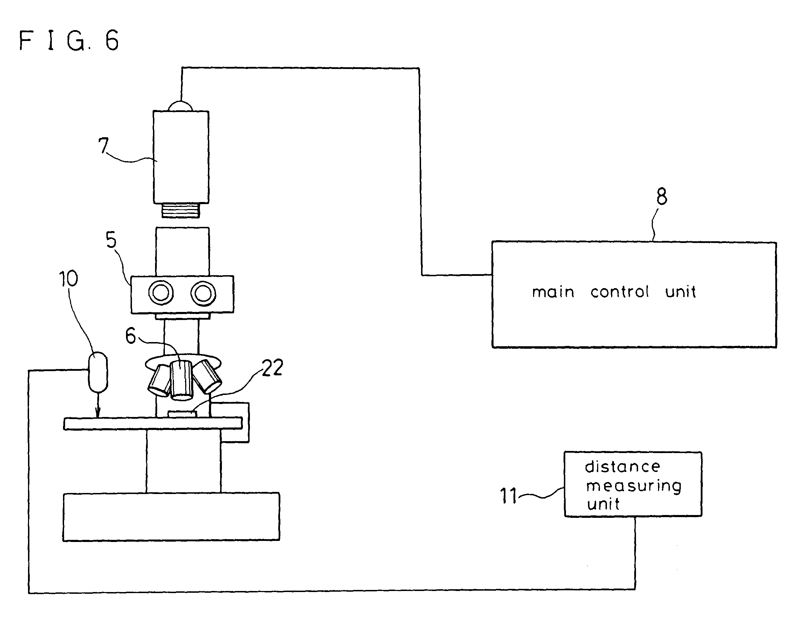

Next, a second embodiment of the present invention will be described. According to this embodiment, a change of color of the interference fringe generated by the white light is converted to an electric signal, whereby the focal position is determined. More specifically, as shown in Fig. 6, a camera for measuring luminance is set above the microscope 5 and an output signal of the camera 7 is input to a main control unit 8 and then focusing operation is performed on the basis of the electric signal obtained by converting a color tone of the interference fringe.

Next, a method for measuring a step difference according to this embodiment of the present invention will be described. The color tone of the interference fringe observed by the optical microscope 5 is converted to an electric signal by the camera 7 for measuring luminance in accordance with respective colors and then input to the main control unit 8. Then, the main control unit 8 receives this luminance signal and then detects the electric signal corresponding to black of the interference fringe to detect 0 point. Then, it informs an operator of this by a method such as lamp display, warning sound or the like. Then, the coordinate position on the stage at that time is read by the vertical distance measuring contact segment 10 and then converted into a measured value by the distance measuring unit 11. Then, such operation is repeated and then the step difference is measured from the distance of the vertical position from a certain reference surface.

Thus, the 0 point is surely detected by the interference fringe. Since this is not visually determined by an operator, an error between operators can be surely prevented and the 0 point can be detected at high speed. Furthermore, since a threshold value or the like at the time of identification of the black interference color can be easily set by the main control unit 8 and an allowable value of precision of 0 point detection and thus precision of step difference detection can be easily set.

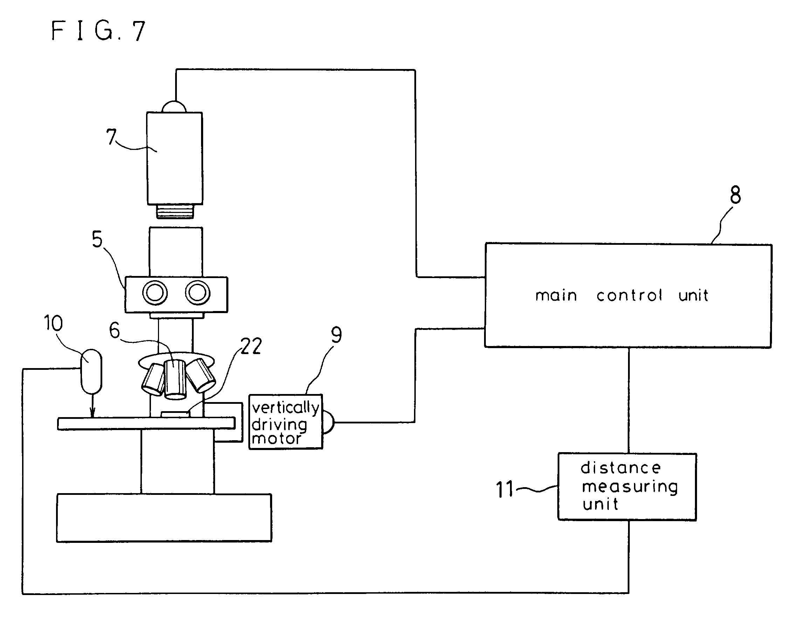

Next, a third embodiment of the present invention will be described. According to this embodiment of the present invention, a change of color of the interference fringe generated by the while light is converted into an electric signal and the focal position is automatically determined on the basis of the electric signal. More specifically, as shown in Fig. 7, the camera 7 for measuring luminance is located above the microscope 5 and a motor 9 for vertically driving the stage is provided on the stage. The motor 9 for vertically driving the stage is driven on the basis of the electric signal obtained by converting the color tone of the interference fringe by the main control unit 8.

Next, a method for measuring a step difference using this device will be described. The motor 9 is driven on the basis of the output of the camera 7 for measuring luminance by the main control unit 8 and then a position (focal position) where the intensity of reflected light detected by the camera 7 becomes "0" is automatically detected. Then, the vertical movement is automatically stopped at that position and the focal position is determined. At this time, whether the stage is moved by the motor 9 upper or lower direction is determined while the moving direction of the stage by the vertical distance measuring contact segment 10 and the luminance signal of the interference fringe are monitored at the main control unit 8. Such operation is repeated to focus on each surface of the sample. Then the vertical position of the sample at that time is stored in the main control unit 8 by the distance measuring contact segment 10, whereby the step difference can be measured from the distance of the vertical position from a certain reference surface.

Thus, since the camera 7 for measuring luminance and the vertically driving motor 9 are combined and controlled by the main control unit 8, it is possible to detect a change of vertical position of the stage and a change of an intensity of reflected light in a correlative manner. As a result, alignment can be implemented with higher precision and operation which was visually performed by the operator can be automatically performed with high precision at high speed.

In addition, if necessary, statistical process of an average value, the maximum (minimum) value, a distribution state or the like may be performed at the main control unit 8 and its processed result may be displayed at a display such as a monitor television 12 or a printer (not shown).

Although a dial gauge is used as the vertical distance measuring contact segment 10 in the above embodiment of the present invention, a signal may be input into a distance measuring unit 11 using an electrostatic sensor or the like.

In addition, although the focal position is adjusted by moving the stage of the microscope 5 in the above embodiment, the focal position may be adjusted by moving, for example, an optical system. In any case, the point is that a distance between a surface of the sample to be measured and the interference objective lens can be varied.

As described above, according to the present invention, the vertical position to the surface of the object to be measured in each observation region is determined by recognizing the interference fringe generated at a predetermined position by first and second beams formed by beam forming means and a step difference of the surface of the object is calculated from an amount of displacement in the direction vertical to the surface to be measured in each region. As a result, the step difference can be measured with high precision by a simple structure and precision of measurement of the step difference can be improved.

In addition, since the focal position is adjusted by observing an interference color of an interference fringe using while light as a light source, the step difference can be easily measured with higher precision.

Furthermore, since means for detecting light intensity converts a color tone of the interference fringe generated by the white light to an electric signal and detects an amount of displacement in the direction vertical to the surface of the object to be measured at each region by detecting a specific color tone, an error between operators can be completely prevented and reliability can be improved.

In addition to the light intensity detecting means, since means for displacing the position of the surface of the object to be measured in the vertical direction is provided and the focal position can be automatically adjusted by displacing the position of the surface in accordance with the output of the light intensity detecting means, the step difference can be measured with high precision at high speed, whereby operation efficiency can be improved.

## Claims

1. A non-contact measuring method for measuring a step difference between a first region and a second region on a surface of an object, said method including the steps of:
directing a first light beam through a focusing means (1) on to the object surface (4);
moving the focusing means (1) and the object surface (4) relative to each other to produce a first visible interference pattern formed by interference between the first light beam after reflection from the object surface (4) at said first region and a second light beam, and to produce a second visible interference pattern formed by interference between the first light beam after reflection from the object surface (4) at said second region and the second light beam; and
using a measurement representative of the difference between the distances which the focusing means (1) and the object surface (4) move relative to each other to produce the visible interference patterns for light reflected from the first and second regions to measure the step difference on the object surface (4);
said method being characterised in comprising the steps of:
producing said second light beam between the focusing means (1) and the object surface (4); and
producing the interference patterns at a position between the focusing means (1) and the object surface (4).

2. A non-contact measuring device for measuring a step difference between a first region and a second region on a surface of an object comprising:
means for directing a first light beam through a focusing means (1) onto the object surface (4);
means (2,3) for producing a second light beam such that the second beam interferes with the first light beam after reflection of the first beam from the object surface (4); means for moving the focusing means (1) and the object surface (4) relative to each other in order to produce a first visible interference pattern from light reflected from said first region;
means for moving the focusing means (1) and the object surface (4) relative to each other in order to produce a second visible interference pattern from light reflected from said second region; and
means for using a measurement representative of the difference between the two relative distances moved to obtain an indication of the step difference between the first region and the second region on the object surface (4);
said device being characterised by:
said second light beam being produced between the focusing means (1) and the object surface (4); and
the interference patterns being generated in a position between the object surface (4) and the focusing means (1).

3. A non-contact measuring device for a step difference according to claim 2, wherein the means for forming said first and second beams is a white light source.

4. A non-contact measuring device for measuring a step difference according to claim 3, further comprising:
light intensity detection means (7) arranged to convert a colour tone of the interference patterns to an electrical signal, and means (8) for using the electrical signal to adjust said relative distances dependent on a specific colour tone of said interference patterns.

5. A non-contact measuring device for measuring a step difference according to claim 2, further comprising:
means for calculating the step difference on the object surface (4) by detecting the displacement of the focusing means (1) relative to the object surface (4) in each region of the object surface to be measured.

6. A non-contact measuring device for measuring a step difference according to claim 2, further comprising:
means (9) for displacing the position of the object surface (4) relative to the object surface (4); and
means for controlling said displacing means (9) on the basis of the output of said light intensity detection means (7).

7. A non-contact measuring device for measuring a step difference according to claim 2, including a single light source and means (3) positioned between the focusing means (1) and the object surface (4) for dividing light from said light source into said first and second beams.

8. A non-contact measuring device for measuring a step difference according to claim 5, further comprising:
means (12) for displaying the calculated step difference based on the output of said step difference calculating means.

## Patentansprüche

1. Verfahren zur berührungslosen Höhendifferenzmessung zwischen einem ersten Gebiet und einem zweiten Gebiet auf einer Oberfläche eines Gegenstands, mit den Schritten:
Richten eines ersten Lichtstrahls durch eine Fokussierungseinrichtung (1) auf die Gegenstandsoberfläche (4);
Bewegen der Fokussierungseinrichtung (1) und der Gegenstandsoberfläche (4) relativ zueinander, um eine erste sichtbare Interferenzstruktur zu erzeugen, welche durch Interferenz zwischen dem ersten Lichtstrahl nach einer Reflektion von der Gegenstandsoberfläche (4) an dem ersten Gebiet und einem zweiten Lichtstrahl gebildet wird, und um eine zweite sichtbare Interferenzstruktur zu erzeugen, welche durch Interferenz zwischen dem ersten Lichtstrahl nach einer Reflektion an der Gegenstandsoberfläche (4) an dem zweiten Gebiet und dem zweiten Lichstrahl gebildet wird; und
Verwenden einer Messung, welche die Differenz zwischen den Entfernungen darstellt, bezüglich derer sich die Fokussierungseinrichtung (1) und die Gegenstandsoberfläche (4) relativ zueinander bewegen, um die sichtbaren Interferenzstrukturen für an den ersten und zweiten Gebieten reflektiertes Licht zur Messung der Höhendifferenz auf der Gegenstandsoberfläche (4) zu erzeugen;
gegenzeichnet durch die Schritte:
Erzeugen des zweiten Lichtstrahls zwischen der Fokussierungseinrichtung (1) und der Gegenstandsoberfläche (4); und
Erzeugen der Interferenzstrukturen an einer Position zwischen der Fokussierungseinrichtung (1) und der Gegenstandsoberfläche (4).

2. Vorrichtung zur berührungslosen Höhendifferenzmessung zwischen einem ersten Gebiet und einem zweiten Gebiet auf einer Oberfläche eines Gegenstands mit:
einer Einrichtung zum Richten eines ersten Lichtstrahls durch eine Fokussierungseinrichtung (1) auf die Gegenstandsoberfläche (4);
einer Einrichtung (2, 3) zum Erzeugen eines zweiten Lichtstrahls derart, daß der zweite Lichtstrahl mit dem ersten Lichtstrahl nach einer Reflektion des ersten Lichtstrahls an der Gegenstandsoberfläche (4) interferiert;
einer Einrichtung zum Bewegen der Fokussierungseinrichtung (1) und der Gegenstandsoberfläche (4) relativ zueinander, um eine erste sichtbare Interferenzstruktur aus dem reflektierten Licht von dem ersten Gebiet zu erzeugen;
einer Einrichtung zum Bewegen der Fokussierungseinrichtung (1) und der Gegenstandsoberfläche (4) relativ zueinander, um eine zweite sichtbare Interferenzstruktur aus reflektiertem Licht von dem zweiten Gebiet zu erzeugen; und
einer Einrichtung zur Verwendung einer Messung, welche die Differenz zwischen den zwei relativen bewegten Entfernungen darstellt, um eine Anzeige der Höhendifferenz zwischen dem ersten Gebiet und dem zweiten Gebiet auf der Gegenstandsoberfläche (4) zu erlangen;
dadurch gekennzeichnet, daß
der zweite Lichtstrahl zwischen der Fokussierungseinrichtung (1) und der Gegenstandsoberfläche (4) gebildet wird; und
die Interferenzstrukturen an einer Position zwischen der Gegenstandsoberfläche (4) und der Fokussierungseinrichtung (1) erzeugt wird.

3. Vorrichtung zur berühungslosen Höhendifferenzmessung nach Anspruch 2, dadurch gekennzeichnet, daß die Einrichtung zur Bildung der ersten und zweiten Lichtstrahlen eine weiße Lichtquelle ist.

4. Vorrichtung zur berühungslosen Höhendifferenzmessung nach Anspruch 3, gekennzeichnet durch
eine Lichtintensitätserfassungseinrichtung (7), welche zur Umwandlung eines Farbtons der Interferenzstrukturen in ein elektrisches Signal eingerichtet ist, und
eine Einrichtung (8) zur Verwendung des elektrischen Signals, um die relativen Entfernungen in Abhängigkeit eines spezifischen Farbtons der Interferenzstrukturen einzustellen.

5. Vorrichtung zur Höhendifferenzmessung nach Anspruch 2, gekennzeichnet durch
eine Einrichtung zum Berechnen der Höhendifferenz auf der Gegenstandsoberfläche (4) durch Erfassen der Verschiebung der Fokussierungseinrichtung (1) relativ zu der Gegenstandsoberfläche (4) in jedem Gebiet der zu vermessenden Gegenstandsoberfläche.

6. Vorrichtung zur berühungslosen Höhendifferenzmessung nach Anspruch 2, gekennzeichnet durch
eine Einrichtung (9) zur Verschiebung der Position der Gegenstandsoberfläche (4) relativ zu der Gegenstandsoberfläche (4); und
eine Einrichtung zur Steuerung der Verschiebungseinrichtung (9) auf der Grundlage des Ausgangssignals der Lichtintensitätserfassungseinrichtung (7).

7. Vorrichtung zur berühungslosen Höhendifferenzmessung nach Anspruch 2, gekennzeichnet durch
eine einzige Lichtquelle und Einrichtung (3), die zwischen der Fokussierungseinrichtung (1) und der Gegenstandsoberfläche (4) positioniert ist, zum Teilen des Lichts von der Lichtquelle in erste und zweite Strahlen.

8. Vorrichtung zur berühungslosen Höhendifferenzmessung nach Anspruch 5, gekennzeichnet durch
eine Einrichtung (12) zur Anzeige der berechneten Höhendifferenz auf der Grundlage des Ausgangssignals der Höhendifferenzberechnungseinrichtung.

## Revendications

1. Procédé de mesure sans contact pour mesurer une différence de hauteur entre une première région et une seconde région sur une surface d'un objet, ledit procédé comprenant les étapes de :
diriger un premier faisceau de lumière à travers un moyen de focalisation (1) sur la surface de l'objet (4) ;
déplacer le moyen de focalisation (1) et la surface de l'objet (4) l'un par rapport à l'autre pour produire un premier motif d'interférence visible formé par interférence entre le premier faisceau de lumière après réflexion par la surface de l'objet (4) à ladite première région et un second faisceau de lumière, et pour produire un second motif d'interférence visible formé par interférence entre le premier faisceau de lumière après réflexion par la surface de l'objet (4) à ladite seconde région et le second faisceau de lumière ; et
utiliser une mesure représentative de la différence entre les distances auxquelles le moyen de focalisation (1) et la surface de l'objet (4) se déplacent l'un par rapport à l'autre pour produire les motifs d'interférence visibles pour la lumière réfléchie par les première et seconde régions pour mesurer la différence de hauteur sur la surface de l'objet (4) ;
ledit procédé étant caractérisé comme comprenant les étapes de :
produire ledit second faisceau de lumière entre le moyen de focalisation (1) et la surface de l'objet (4) ; et
produire les motifs d'interférence à une position entre le moyen de focalisation (1) et la surface de l'objet (4).

2. Dispositif de mesure sans contact pour mesurer une différence de hauteur entre une première région et une seconde région sur une surface d'un objet comprenant :
un moyen pour diriger un premier faisceau de lumière à travers un moyen de focalisation (1) sur la surface de l'objet (4) ;
un moyen (2, 3) pour produire un second faisceau de lumière tel que le second faisceau interfère avec le premier faisceau de lumière après réflexion du premier faisceau par la surface d'objet (4) ; un moyen pour déplacer le moyen de focalisation (1) et la surface de l'objet (4) l'un par rapport à l'autre afin de produire un premier motif d'interférence visible à partir de la lumière réfléchie par ladite première région ;
un moyen pour déplacer le moyen de focalisation (1) et la surface de l'objet (4) l'un par rapport à l'autre afin de produire un second motif d'interférence visible à partir de la lumière réfléchie par ladite seconde région ; et
un moyen pour utiliser une mesure représentative de la différence entre les deux distances relatives déplacées pour obtenir une indication de la différence de hauteur entre la première région et la seconde région sur la surface de l'objet (4) ;
ledit dispositif étant caractérisé par :
ledit second faisceau de lumière étant produit entre le moyen de focalisation (1) et la surface de l'objet (4) ; et
les motifs d'interférence étant produits dans une position entre la surface de l'objet (4) et le moyen de focalisation (1).

3. Dispositif de mesure sans contact pour mesurer une différence de hauteur selon la revendication 2, dans lequel le moyen pour former les premier et second faisceaux précités est une source de lumière blanche.

4. Dispositif de mesure sans contact pour mesurer une différence de hauteur selon la revendication 3, comprenant de plus :
un moyen de détection d'intensité de lumière (7) agencé pour convertir une teinte de couleur des motifs d'interférence en un signal électrique et un moyen (8) pour utiliser le signal électrique pour régler les distances relatives précitées dépendant d'une teinte de couleur spécifique desdits motifs d'interférence.

5. Dispositif de mesure sans contact pour mesurer une différence de hauteur selon la revendication 2, comprenant de plus :
un moyen pour calculer la différence de hauteur sur la surface de l'objet (4) en détectant le déplacement du moyen de focalisation (1) par rapport à la surface de l'objet (4) dans chaque région de la surface de l'objet à mesurer.

6. Dispositif de mesure sans contact pour mesurer une différence de hauteur selon la revendication 2, comprenant de plus :
un moyen (9) pour déplacer la position de la surface de l'objet (4) par rapport à la surface de l'objet (4) ; et
un moyen pour commander ledit moyen de déplacement (9) sur la base de la sortie du moyen de détection d'intensité de lumière précitée (7).

7. Dispositif de mesure sans contact pour mesurer une différence de hauteur selon la revendication 2, comprenant une source de lumière unique et un moyen (3) positionné entre le moyen de focalisation (1) et la surface de l'objet (4) pour diviser la lumière de ladite source de lumière en premier et second faisceaux précités.

8. Dispositif de mesure sans contact pour mesurer une différence de hauteur selon la revendication 5, comprenant de plus :
un moyen (12) pour visualiser la différence de hauteur calculée basée sur la sortie du moyen de calcul précité de différence de hauteur.
